# EUROPÄISCHE PATENTSCHRIFT

(11) **EP 0 867 015 B1**
(45) Veröffentlichungstag und Bekanntmachung des Hinweises auf die Patenterteilung: **04.08.1999**
(21) Anmeldenummer: 96943958.7
(22) Anmeldetag: 13.12.1996
(51) Int. Cl.: G06K 19/073

(54) **ZUSATZSICHERHEITSMERKMAL FÜR CHIPKARTEN**
ADDITIONAL SAFETY FEATURE FOR CHIP CARDS
SECURITE SUPPLEMENTAIRE POUR CARTES A PUCE

(30) Priorität: 14.12.1995 CH 353695
(43) Veröffentlichungstag der Anmeldung: 30.09.1998
(73) Patentinhaber: Landis & Gyr Technology Innovation AG, 6301 Zug (CH)
(72) Erfinder: KRACK, Helmut, D-60335 Frankfurt (DE)
(86) Internationale Anmeldenummer: EP9605619
(87) Internationale Veröffentlichungsnummer: WO9722086

(56) Entgegenhaltungen:
- EP-A- 0 375 545
- EP-A- 0 481 881
- EP-A- 0 565 480
- FR-A- 2 483 112

## Beschreibung

Die Erfindung bezieht sich auf ein Zusatzsicherheitsmerkmal für Chipkarten gemäss dem Oberbegriff des Anspruchs 1.

Das Zusatzsicherheitsmerkmal wird auf oder in einer Chipkarte zusätzlich zu dort bereits vorhandenen Sicherheitsmerkmalen verwendet, um gewisse Arten von Fälschungen zu bekämpfen und so den Missbrauch der betreffenden Chipkarten zu erschweren oder gar zu verhindern.

Chipkarten als bargeldloses Zahlungsmittel für Telephonstationen und/oder Verkaufsautomaten sind bekannt. Sie bestehen bekanntlich aus einer Karte, z. B. aus Kunststoff, die z. B. mit einem Hohlraum versehen ist. Auf der Karte oder im Hohlraum ist ein Chip angeordnet, also ein Halbleiterkristall, in dem eine elektrische Schaltung integriert ist. Elektrische Anschlusskontakte des Chips sind auf oder in der Karte, die z. B. als gedruckte Schaltung ausgebildet ist, über elektrische Leiter mit elektrischen Anschlusskontakte der Karte verbunden. Die letzteren bilden zusammen ein Kontaktfeld. Bei der Benutzung wird die Chipkarte in einen Kartenschlitz eines Auswertegerätes der Telephonstation oder des Verkaufsautomaten gesteckt, wodurch über die Kartenanschlusskontakte elektrische Verbindungen zwischen den elektrischen Schaltungen des Chips und des Auswertegerätes hergestellt werden. Im letzteren wird die Echtheit und der Geldwert der Chipkarte geprüft. Bei anerkannter Echtheit wird die Benutzung freigegeben und der Geldwert der Chipkarte um den Wert der bezogenen Dienstleistung bzw. Ware verringert.

In der letzten Zeit sind Chipkarten zu Fälschungszwecken so manipuliert worden, dass bei einer Benutzung z. B. der gespeicherte Geldwert der Chipkarte unverändert blieb. Oder es sind Zusatzschaltungen auf Chipkarten angebracht worden, die den gesamten Kartenchip simulierten. Das Aufbringen von üblichen Zusatzsicherheitsmerkmalen auf die Chipkarten ist im letzteren Fall zwecklos, da diese Massnahme in der Regel dadurch unterlaufen werden kann, indem zum Herstellen der Fälschungen Originalkarten verwendet werden. Original-Telephon-Chipkarten sind z. B. in letzter Zeit durch Aufbringen einer elektronischen Zusatzschaltung so manipuliert worden, dass sie nach einem Telephongespräch durch Herausziehen und Wiedereinstecken in den Kartenleser erneut das ursprüngliche Guthaben aufwiesen.

Zur Abwehr betrügerischer Handlungen bei Chipkarten schlägt die EP-A 0 375'545 vor, die elektronische Schaltung mit einer U-förmigen Schleife, einem temperaturempfindlichen Sensor, zu umgeben. Die mit dem Sensor verbundene elektronische Schaltung misst laufend die Temperatur und löst ein Fehlersignal aus, sobald eine der Temperaturgrenzen "zu kalt" bzw. "zu heiss" überschritten ist. Das Fehlersignal wird in einem flüchtigen Speicher der elektronischen Schaltung gespeichert. Ein zweiter Schaltkreis enthält einen magnetisch betätigten Schalter, der beim Oeffnen des Gehäuses durch Unterbrechen der Energieversorgung den Inhalt des flüchtigen Speichers zerstört.

Aus der EP-A 0 565'480 ist bekannt, wie vorsätzliche oder fahrlässige Zerstörung von Chipkarten z.B. durch Erwärmung vom den Kartenherausgeber sicher erkannt werden können, wenn beispielsweise die defekte Chipkarten zum Umtausch eingereicht wurde.

Der Erfindung liegt die Aufgabe zugrunde, bekannte Chipkarten zusätzlich zu sichern und ein erfolgreiches Wirksamwerden der oben beschriebenen Arten von Fälschungen entgegenzuwirken, so dass derart gefälschte Chipkarten nicht mehr zum Bezug von Dienstleistungen oder Waren in Telephonstationen und/oder Verkaufsautomaten verwendet werden können, die mit einem zu den erfindungsgemäss gesicherten Chipkarten passenden Kartenleser ausgerüstet sind.

Die genannte Aufgabe wird erfindungsgemäss durch die im Kennzeichen des Anspruchs 1 angegebenen Merkmale gelöst. Vorteilhafte Ausgestaltungen der Erfindung ergeben sich aus den abhängigen Ansprüchen.

Ausfiihrungsbeispiele der Erfindung sind in der Zeichnung dargestellt und werden im folgenden näher beschrieben.

Es zeigen:
- Fig. 1: eine prinzipielle Darstellung einer ersten Variante eines erfindungsgemässen Zusatzsicherheitsmerkmals,
- Fig. 2: eine prinzipielle Darstellung einer zweiten Variante eines erfindungsgemässen Zusatzsicherheitsmerkmals,
- Fig. 3: ein prinzipieller Aufbau einer ersten Variante eines Kartenlesers und
- Fig. 4: ein prinzipieller Aufbau einer zweiten Variante eines Kartenlesers.

Bei den obenerwähnten Arten von Fälschungen werden mit den Simulatoren entweder keine Originalkarten verwendet oder wird - bei Verwendung von Originalkarten - das Kontaktfeld der Chipkarte durch thermisches Kontaktieren elektrischer Leiter dazu benutzt, die der Simulation dienende Zusatzschaltung anzuschliessen. Eine weitere Fälschungsmöglichkeit besteht im Aufbringen elektrisch leitfähiger Schichten als Leiter zwischen einer elektronischen Schaltung und dem Kontaktfeld mittels chemischer Pasten oder ähnlicher Verfahren. Diese Pasten enthalten einen hohen Anteil metallischer Elemente, meist Silber. Die leitfähigen Schichten sind in der Regel für Licht schwer zu durchdringen.

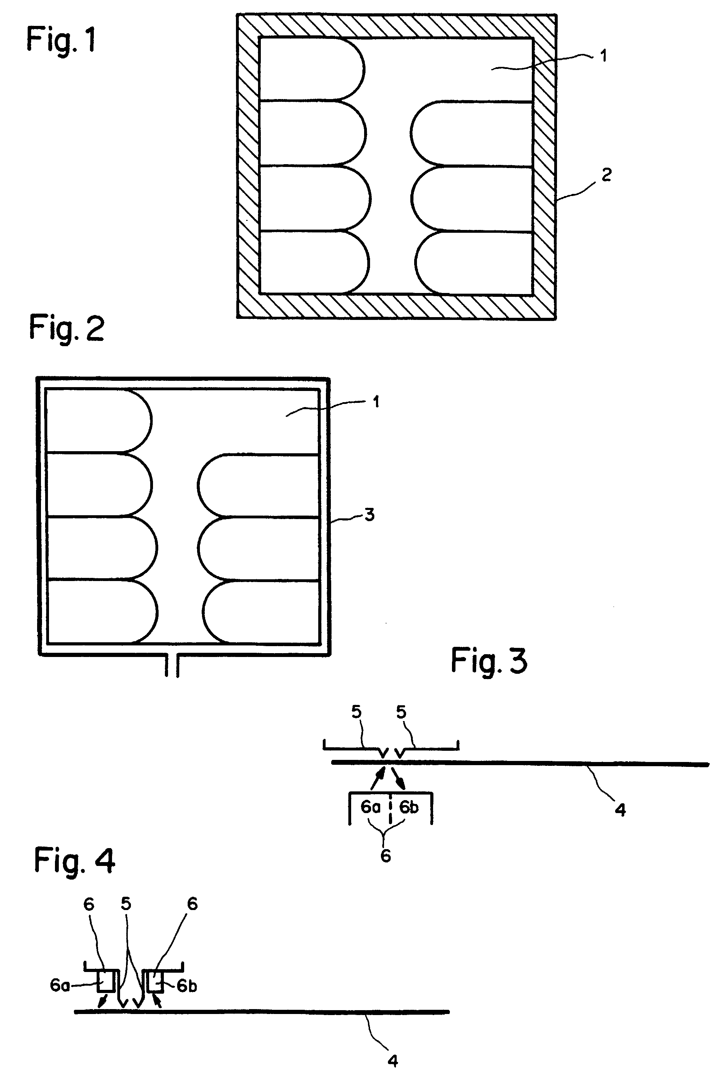

In der Fig. 1 und der Fig. 2 ist jeweils ein Kontaktfeld 1 einer Chipkarte schematisch dargestellt. In allen Varianten ist das erfindungsgemässe Zusatzsicherheitsmerkmal eine Schleife 2 bw. 3, welche auf oder in der Chipkarte seitlich um das durch die elektrische Anschlusskontakte der Chipkarte gebildete Kontaktfeld 1 herum angeordnet ist. Die Gestalt der Schleife ist an sich beliebig. In der Fig. 1 und der Fig. 2 gilt die Annahme, dass die Schleife 2 bzw. 3 rechteckförmig und mindestens annähernd geschlossen ist. Die Schleifen 2 und 3 sind thermisch mit dem Kontaktfeld 1 verbunden. Mindestens eine messbare Eigenschaft der Schleife 2 bzw. 3 ist durch thermische Beeinflussung dauerhaft veränderbar. Die Schleife 2 bzw. 3 ist vorzugsweise für einen Normalbetrachter unsichtbar im Kartenmaterial der Chipkarte eingebettet.

In der in der Fig. 1 dargestellten ersten Variante des erfindungsgemässen Zusatzsicherheitsmerkmals ist die Schleife 2 eine mit Licht einer vorgegebenen Wellenlänge lesbare optische Spur, die einen in der Fig. 1 nicht dargestellten kodierten Inhalt aufweist und aus Material besteht, welches bei einer thermischen Beeinflussung eine dauerhafte Änderung oder einen dauerhaften Verlust des kodierten Inhaltes der optischen Spur verursacht. Bei einer Fälschung durch Anschluss einer Zusatzschaltung mittels einer thermischen Kontaktierung, z. B. mittels Löten, wird der kodierte Inhalt der optischen Spur dauerhaft und von einem optischen Kartenleser erkennbar verändert, wenn die Kontaktierungstemperatur gross genug ist und einen gewissen Wert überschreitet. Der optische Kartenleser erkennt die Änderung und damit die Fälschung. Er kann somit veranlassen, dass die Annahme der Chipkarte verweigert wird. Bei einer Kontaktierung mittels einer elektrisch leitfähigen Paste wird dagegen die optische Spur mindestens teilweise durch die für das betreffende Licht undurchlässige Schicht abgedeckt, was vom optischen Kartenleser erkennbar ist, wenn dessen Auflösung gross genug ist. Der kodierte Inhalt der optischen Spur ist vorzugsweise in einer Mikrostruktur enthalten, mit der die optische Spur versehen ist. Das Kartenmaterial der Chipkarte ist in der ersten Variante bevorzugt mindestens für das Licht der vorgegebenen Wellenlänge durchlässig. Die äusseren Abmessungen der Schleife 2 sind vorzugsweise der Auflösung des zugehörigen optischen Kartenlesers so angepasst, dass die Auflösung des letzteren gross genug ist, um die gesamte Schleife 2 zu erfassen.

In der in der Fig. 2 dargestellten zweiten Variante des erfindungsgemässen Zusatzsicherheitsmerkmals ist die Schleife 3 ein elektrischer Leiter. Eine durch eine thermische Beeinflussung verursachte Änderung der elektrischen Leitfähigkeit oder des elektrischen Widerstandes der Schleife 3 ist dauerhaft und messbar. Die Chipkarte weist vorzugsweise eine mit der Schleife 3 gekoppelte und von aussen anregbare Schwingschaltung auf, deren Resonanzfrequenz durch Leitfähigkeits- oder Widerstandsänderung des elektrischen Leiters messbar veränderbar ist, ähnlich wie bei bekannten Diebstahlsicherungen in Warenhäusern. Die Schwingschaltung ist bevorzugt - und zwar vorzugsweise für einen Normalbetrachter unsichtbar - im Kartenmaterial der Chipkarte eingebettet. Die zweite Variante ist verwendbar, wenn es nur um den Schutz vor thermisch kontaktierten Leitern geht. Bei einer Fälschung durch Anschluss einer Zusatzschaltung mittels einer thermischen Kontaktierung, z. B. mittels Löten, wird in der zweiten Variante die elektrische Leitähigkeit bzw. der elektrische Widerstand der Schleife 3 dauerhaft und von einem elektronischen Kartenleser erkennbar verändert. Dieser erkennt die Änderung und damit die Fälschung. Er kann somit veranlassen, dass die Annahme der Chipkarte verweigert wird.

Ein grosser Vorteil des erfindungsgemässen Zusatzsicherheitsmerkmals ist, dass dieses anlässlich einer versuchten Fälschung bereits vor der Simulation durch die Kontaktierung der Zusatzschaltung dauerhaft verändert wird, so dass die Zusatzschaltung nicht die ursprüngliche, sondern die bereits durch die Kontaktierung veränderte Anordnung simuliert, was eine falsche Simulation ergibt, welche durch den Kartenleser ohne weiteres erkannt werden kann.

In der Fig. 3 und der Fig. 4 ist ein prinzipieller Aufbau je einer von zwei Varianten des optischen oder elektronischen Kartenlesers dargestellt. Im Aufbau gemäss der Fig. 3 sind im Kartenleser mechanische Kontakte 5 und ein optischer bzw. elektrischer Lesekopf 6 auf entgegengesetzten Seiten einer Chipkarte 4 angeordnet, während sie sich im Aufbau gemäss der Fig. 4 auf einer gleichen Seite der Chipkarte 4 im Kartenleser befinden. Es sind z. B. jeweils zwei mechanische Kontakte 5 vorhanden zum Abgriff- zwecks Auswertung - zweier elektrischer Signale von der Chipkarte 4. Der Lesekopf 6 besteht jeweils aus einem Sendeteil 6a und einem Empfangsteil 6b. Bei Verwendung der ersten Variante des erfindungsgemässen Zusatzsicherheitsmerkmals sendet der Sendeteil 6a des dann optischen Lesekopfes 6 Licht einer bestimmten Wellenlänge, welches von der Schleife 2, d. h. von der optischen Spur der Chipkarte, kodiert reflektiert wird, um nach seinem Empfang im Empfangsteil 6b in ein elektrisches Signal umgewandelt zu werden, dessen kodierter Inhalt anschliessend vom Auswertegerät des Kartenlesers ausgewertet wird. Bei Verwendung der zweiten Variante des erfindungsgemässen Zusatzsicherheitsmerkmals erzeugt der Sendeteil 6a des dann elektrischen Lesekopfes 6 eine Wechselspannung, die bei Benutzung einer Schwingschaltung, durch induktive Kopplung in die Schleife 3 induziert wird, die ein Teil der Schwingschaltung ist. Dort erzeugt sie eine Resonanzspannung, deren Resonanzfrequenz abhängig ist vom Leitfähigkeitsbzw. Widerstandswert des elektrischen Leiters der Schleife 3. Die Resonanzspannung induziert ihrerseits in den Empfangsteil 6b des elektrischen Lesekopfes 6 eine Spannung, die dem Auswertegerät des Kartenlesers zugeleitet wird, der dann mit Hilfe der Resonanzfrequenz den elektrischen Leitähigkeits- bzw. den elektrischen Widerstandeswert der Schleife 3 ermittelt.

## Patentansprüche

1. Zusatzsicherheitsmerkmal in Form einer Schleife (2, 3) für Chipkarten, dadurch gekennzeichnet, dass das Zusatzsicherheitsmerkmal auf oder in der Chipkarte seitlich um ein durch elektrische Anschlusskontakte der Chipkarte gebildetes Kontaktfeld (1) herum angeordnet sowie thermisch mit dem letzteren verbunden ist und dass mindestens eine messbare Eigenschaft der Schleife (2, 3) durch thermische Beeinflussung dauerhaft veränderbar ist.

2. Zusatzsicherheitsmerkmal nach Anspruch 1, dadurch gekennzeichnet, dass die Schleife (2, 3) für einen Normal betrachter unsichtbar im Kartenmaterial der Chipkarte eingebettet ist.

3. Zusatzsicherheitsmerkmal nach Anspruch 1 oder 2, dadurch gekennzeichnet, dass die Schleife (2) eine mit Licht einer vorgegebenen Wellenlänge lesbare optische Spur ist, die einen kodierten Inhalt aufweist und aus Material besteht, welches bei einer thermischen Beeinflussung eine dauerhafte Änderung oder einen dauerhaften Verlust des kodierten Inhaltes der optischen Spur verursacht.

4. Zusatzsicherheitsmerkmal nach Anspruch 3, dadurch gekennzeichnet, dass der kodierte Inhalt der optischen Spur in einer Mikrostruktur enthalten ist, mit der die optische Spur versehen ist.

5. Zusatzsicherheitsmerkmal nach Anspruch 3 oder 4, dadurch gekennzeichnet, dass das Kartenmaterial der Chipkarte mindestens für das Licht der vorgegebenen Wellenlänge durchlässig ist.

6. Zusatzsicherheitsmerkmal nach einem der Ansprüche 1 bis 5, dadurch gekennzeichnet, dass die äusseren Abmessungen der Schleife (2) einer Auflösung eines zugehörigen optischen Kartenlesers so angepasst sind, dass die Auflösung des letzteren gross genug ist, um die gesamte Schleife (2) zu erfassen.

7. Zusatzsicherheitsmerkmal nach Anspruch 1 oder 2, dadurch gekennzeichnet, dass die Schleife (3) ein elektrischer Leiter ist und dass eine durch eine thermische Beeinflussung verursachte Änderung ihrer elektrischen Leitfähigkeit oder ihres elektrischen Widerstandes messbar und dauerhaft ist.

8. Zusatzsicherheitsmerkmal nach Anspruch 7, dadurch gekennzeichnet, dass die Chipkarte eine mit der Schleife (3) gekoppelte und von aussen anregbare Schwingschaltung aufweist, deren Resonanzfrequenz durch Leitfähigkeits- oder Widerstandsänderung des elektrischen Leiters messbar veränderbar ist.

9. Zusatzsicherheitsmerkmal nach Anspruch 8, dadurch gekennzeichnet, dass die Schwingschaltung im Kartenmaterial der Chipkarte eingebettet ist.

10. Zusatzsicherheitsmerkmal nach Anspruch 9, dadurch gekennzeichnet, dass die Schwingschaltung für einen Normalbetrachter unsichtbar im Kartenmaterial der Chipkarte eingebettet ist.

## Claims

1. An additional security feature in the form of a loop (2, 3) for chip cards, characterised in that the additional security feature is arranged on or in the chip card laterally around a contact array (1) formed by electrical connecting contacts of the chip card and is thermally connected to the contact array and that at least one measurable property of the loop (2, 3) is irreversibly changeable by thermal influencing.

2. An additional security feature according to claim 1 characterised in that the loop (2, 3) is embedded in the card material of the chip card in such a way as to be invisible for a normal viewer.

3. An additional security feature according to claim 1 or claim 2 characterised in that the loop (2) is an optical track which is readable with light of a predetermined wavelength and which has a coded content and which comprises material which upon thermal influencing causes a permanent change in or a permanent loss of the coded content of the optical track.

4. An additional security feature according to claim 3 characterised in that the coded content of the optical track is contained in a microstructure with which the optical track is provided.

5. An additional security feature according to claim 3 or claim 4 characterised in that the card material of the chip card is transparent at least for the light of the predetermined wavelength.

6. An additional security feature according to one of claims 1 to 5 characterised in that the external dimensions of the loop (2) are so adapted to a resolution of an associated optical card reader that the resolution of the latter is sufficiently great to detect the entire loop (2).

7. An additional security feature according to claim 1 or claim 2 characterised in that the loop (3) is an electrical conductor and that a change in its electrical conductivity or its electrical resistance, caused by thermal influencing, can be measured and is permanent.

8. An additional security feature according to claim 7 characterised in that the chip card has a resonant circuit which is coupled to the loop (3) and which can be excited from the exterior and whose resonance frequency is measurably variable by a change in the conductivity or resistance of the electrical conductor.

9. An additional security feature according to claim 8 characterised in that the resonant circuit is embedded in the card material of the chip card.

10. An additional security feature according to claim 9 characterised in that the resonant circuit is embedded in the card material of the chip card so as to be invisible for a normal viewer.

## Revendications

1. Agencement de sécurité supplémentaire en forme de boucle (2, 3) pour cartes de mémoire, caractérisé en ce que l'agencement de sécurité supplémentaire est agencé latéralement sur ou dans la carte à mémoire autour d'un champ de contact (1) formé par des contacts électriques de raccordement de la carte à mémoire et est relié thermiquement à ce champ, et en ce qu'au moins une propriété mesurable de la boucle (2, 3) est modifiable durablement par effet thermique.

2. Agencement de sécurité supplémentaire selon la revendication 1, caractérisé en ce que la boucle (2, 3) est enrobée dans la matière de carte de la carte à mémoire d'une façon invisible pour un observateur normal.

3. Agencement de sécurité supplémentaire selon la revendication 1 ou 2, caractérisé en ce que la boucle (2) est une piste optique qui est lisible au moyen d'une lumière d'une longueur d'onde prédéfinie et qui comporte un contenu codé et est composée d'une matière qui provoque lorsqu'elle est soumise à un effet thermique une modification durable ou une perte durable du contenu codé de la piste optique.

4. Agencement de sécurité supplémentaire selon la revendication 3, caractérisé en ce que le contenu codé de la piste optique est contenu dans une microstructure dont la piste optique est pourvue.

5. Agencement de sécurité supplémentaire selon la revendication 3 ou 4, caractérisé en ce que la matière de carte de la carte à mémoire est transparente au moins à la lumière de la longueur d'onde prédéfinie.

6. Agencement de sécurité supplémentaire selon l'une des revendications 1 à 5, caractérisé en ce que les dimensions extérieures de la boucle (2) sont adaptées à une résolution d'un lecteur de carte optique associé, de façon que la résolution de ce dernier soit suffisamment grande pour détecter toute la boucle (2).

7. Agencement de sécurité supplémentaire selon la revendication 1 ou 2, caractérisé en ce que la boucle (3) est un conducteur électrique et qu'une modification de sa conductivité électrique ou de sa résistance électrique, provoquée par effet thermique, est mesurable et durable.

8. Agencement de sécurité supplémentaire selon la revendication 7, caractérisé en ce que la carte à mémoire comporte un circuit oscillant couplé avec la boucle (3) et excitable de l'extérieur, dont la fréquence de résonance peut être modifiée de façon mesurable par une modification de la conductivité ou de la résistance du conducteur électrique.

9. Agencement de sécurité supplémentaire selon la revendication 8, caractérisé en ce que le circuit oscillant est enrobé dans la matière de carte de la carte à mémoire.

10. Agencement de sécurité supplémentaire selon la revendication 9, caractérisé en ce que le circuit oscillant est enrobé dans la matière de carte de la carte à mémoire d'une façon invisible pour un observateur normal.
